# EUROPÄISCHE PATENTSCHRIFT

(11) **EP 3 372 536 B1**
(45) Veröffentlichungstag und Bekanntmachung des Hinweises auf die Patenterteilung: **16.09.2020**
(21) Anmeldenummer: 18161082.5
(22) Anmeldetag: 09.03.2018
(51) Int. Cl.: B65G 15/34, B29D 29/06

(54) **ENDLOSBAND MIT ZUGTRÄGER**
ENDLESS BELT WITH TENSION MEMBER
BANDE SANS FIN À SUPPORT DE TRACTION

(30) Priorität: 10.03.2017 DE 102017105126
(43) Veröffentlichungstag der Anmeldung: 12.09.2018
(73) Patentinhaber: Max Schlatterer GmbH & Co. KG, 89542 Herbrechtingen (DE)
(72) Erfinder: Weit, Dieter Karl, 89542 Herbrechtingen-Bissingen (DE)
(74) Vertreter: Ostertag & Partner Patentanwälte mbB

(56) Entgegenhaltungen:
- EP-A1- 3 111 748
- EP-A2- 2 308 779
- DE-A1- 4 021 064
- DE-U- 1 982 374
- DE-U1- 8 426 836
- DE-U1-202004 019 688

## Beschreibung

### HINTERGRUND DER ERFINDUNG

### 1. Gebiet der Erfindung

Die Erfindung betrifft ein Endlosband mit einer Tragseite, einer Laufseite sowie einer ersten und einer zweiten Bandkante, welche entlang einer Laufrichtung verlaufen, einem Zugträger, der zwischen Tragseite und Laufseite angeordnet ist, wobei der Zugträger ein Gewebe aufweist, das sich von der ersten zu der zweiten Bandkante erstreckt.

### 2. Beschreibung des Standes der Technik

Endlosbänder der eingangs genannten Art werden auch als Riemen bezeichnet und als Transportbänder zur Führung oder/und Aufnahme von Gegenständen eingesetzt. Unter dem Begriff Endlosband wird hier ein Band oder ein Riemen verstanden, das ohne Enden durchgehend hergestellt ist und so beispielsweise über Rollen geführt und angetrieben werden kann.

Im Bereich der Nahrungsmittel- oder Futtermittelverarbeitung finden diese Endlosbänder im Zuge der Automatisierung der Verarbeitung zunehmend Verbreitung. Bei der Konstruktion und dem Betrieb von Anlagen, die bei der Nahrungsmittel- oder Futtermittelverarbeitung / -herstellung oder für kosmetische oder pharmazeutische Erzeugnisse eingesetzt werden, müssen besondere Vorschriften eingehalten werden, die im Folgenden mit dem Begriff "nahrungsmittelverträglich" subsumiert sein sollen.

So kann beispielsweise bei Transportbändern, die direkt mit Nahrungsmitteln in Kontakt kommen, ein nicht vorhersehbarer Produktkontakt stattfinden. Ein solcher Produktkontakt kann beispielsweise durch sich lösenden Abrieb hervorgerufen werden. Dieser Abrieb kann in das Lebensmittel gelangen und dieses so kontaminieren. Je nach Einsatzgebiet des Endlosbandes muss es für hohe Zugkräfte ausgelegt sein. Dabei können Zugkräfte im Bereich von mehreren zehntausend Newton auftreten. Entsprechend müssen das Material und der Aufbau des Zugträgers für die Aufnahme solcher Kräfte geeignet sein. Gleichzeitig muss die Nahrungsmittelverträglichkeit eines solchen Transportbandes gewährleistet sein.

Ein Beispiel für ein solches Transportband, welches nicht lebensmittelverträglich ist und bei welchem die transportierten Nahrungsmittel durch sich lösenden Abrieb kontaminiert werden können, ist der DE 84 26 836 U1 zu entnehmen. Das Dokument DE 84 26 836 U1 offenbart ein Endlosband nach dem Oberbegriff des Anspruchs 1.

### ZUSAMMENFASSUNG DER ERFINDUNG

Es ist eine Aufgabe der Erfindung, ein Endlosband bereitzustellen, das in einer Anlage für die Herstellung unter anderem von Nahrungsmitteln, Futtermitteln oder für die Herstellung von kosmetischen oder/und pharmazeutischen Produkten eingesetzt werden kann und gleichzeitig eine besonders hohe Zugfestigkeit aufweist.

Diese Aufgabe wird durch ein Endlosband gemäß dem unabhängigen Anspruch gelöst. Weitere Ausgestaltungen der Erfindung sind in den abhängigen Ansprüchen angegeben. Das erfindungsgemäße Endlosband weist eine Tragseite, eine Laufseite sowie eine erste und eine zweite Bandkante auf. Die Bandkanten verlaufen entlang einer Laufrichtung des Endlosbandes.

Das Endlosband weist ferner einen Zugträger auf. Der Zugträger weist ein Gewebe auf, das zwischen der Tragseite und der Laufseite angeordnet ist und der Aufnahme von Zugkräften entlang der Laufrichtung des Endlosbandes dient. Das Gewebe des Zugträgers weist in einer Richtung senkrecht zu der Laufrichtung zumindest zwei verschiedene Materialien auf. Dabei ist insbesondere vorgesehen, dass das Gewebe in einem Bereich der Bandkanten ein erstes Material aufweist und in einem von den Bandkanten abgewandten Bereich ein zweites Material aufweist, wobei sich das erste Material und das zweite Material unterscheiden.

Erfindungsgemäß ist vorgesehen, dass das erste Material im Bereich der Bandkanten lebensmittelverträglich ist.

Es hat sich herausgestellt, dass für eine ausreichende Nahrungsmittelverträglichkeit die Wahl des richtigen Zugträgergewebes entscheidend ist. Die Tragseiten und die Laufseiten, die unmittelbar oder mittelbar mit dem Nahrungsmittel in Kontakt kommen können, sind auf vergleichsweise einfache Weise in Einklang mit den entsprechenden Vorschriften bringbar. Der Zugträger hingegen, der eigentlich nicht in Kontakt mit dem Nahrungsmittel kommen sollte, kann durch Abrieb beispielsweise an Führungsoberflächen freigelegt werden und so für einen unerwünschten Produktkontakt sorgen.

Besonders der Bereich nahe der Bandkanten kann dabei von besonderem Verschleiß betroffen sein. Eine Möglichkeit zur Lösung des Problems könnte darin bestehen, an den Randbereichen des Endlosbandes nahe den Bandkanten einen zugträgerfreien Pufferbereich zu schaffen. Dies stellt aber einen sehr aufwändigen Herstellungsprozess dar.

Durch die erfindungsgemäße Wahl unterschiedlicher Materialien für den Randbereich nahe der Bandkanten und für den zentraleren Bereich fern der Bandkanten kann den verschiedenen Randbedingungen deutlich besser Rechnung getragen werden. Das Material für den zentraleren Bereich braucht nicht nahrungsmittelverträglich zu sein, da es selbst bei extremem Abrieb nicht freigelegt werden wird. Es kann somit mit der notwendigen Zugfestigkeit ohne Rücksichtnahme auf Nahrungsmittelverträglichkeit ausgelegt sein. Im Gegensatz dazu wird das Material im Randbereich nahe der Bandkanten nahrungsmittelverträglich ausgelegt und kann so einerseits bei einem möglicherweise stattfindenden Abrieb nicht das Produkt kontaminieren. Gleichzeitig trägt der Randbereich durch das Vorhandensein eines Zugträgergewebes nach wie vor zu der Zugfestigkeit des Endlosbandes bei.

Hier und im Folgenden sollen mit dem Begriff "Gewebe" verschiedene flächenförmige textile Gebilde mit verschiedenen Herstellungsarten wie Gewebe, Gewirke, Gestricke oder Geflechte, auch in Kombination untereinander, umfasst sein.

Bei einer bevorzugten Ausführungsform der Erfindung ist vorgesehen, dass der Zugträger mehrteilig ausgeführt ist. Insbesondere können je ein Teil des Zugträgers im Bereich der Bandkanten und ein weiterer Teil des Zugträgers zentral, also in dem von den Bandkanten abgewandten Bereich, angeordnet sein. Die einzelnen Teile des Zugträgers können die verschiedenen Materialien aufweisen und beispielsweise während eines Herstellungsvorgangs wie beispielsweise Stricken, Weben, Wirken oder Flechten miteinander verbunden sein. Insbesondere kann vorgesehen sein, dass das erste Material ein Polyester umfasst. Polyestergewebe wie beispielsweise PES sind als nahrungsmittelverträgliche Zugträger einfach verarbeitbar und weisen eine ausreichende Zugfestigkeit für die Randbereiche auf.

Eine Weiterbildung der Erfindung sieht vor, dass das zweite Material in dem von den Bandkanten entfernten Bereich eine Reißfestigkeit pro 10 mm endloser Breite von mindestens 800 N, eine Banddehnung bei 10 mm endloser Breite bei 300 N von maximal 2%, bei 600 N von maximal 4%, bei 1000 N von maximal 6% und eine Kraft bei 1% Dehnung und 10 mm endloser Breite von mindestens 200 N aufweist. Die angegebenen Materialparameter stellen lediglich eine Untergrenze dar.

Ein beispielhaftes Zugträgermaterial weist eine Reißfestigkeit pro 10 mm endloser Breite von mindestens 7000 N, eine Banddehnung bei 10 mm endloser Breite bei 300 N von maximal 0,3%, bei 600 N von maximal 0,5%, bei 1000 N von maximal 0,7% und eine Kraft bei 1% Dehnung und 10 mm endloser Breite von mindestens 1500 N auf.

Insbesondere kann vorgesehen sein, dass das zweite Material ein Aramid-Gewebe umfasst. Unter einem Aramid-Gewebe wird vorliegend ein Gewebe mit einer Aramidfaser verstanden.

Bei einer Ausführungsform der Erfindung ist vorgesehen, dass die Bandkanten durch einen Trennvorgang herstellbar sind. Dies ermöglicht einen besonders einfachen Herstellungsvorgang. So kann das Endlosband aus einem eigentlich breiteren Halbzeug herausgetrennt werden. Das Heraustrennen kann dabei beispielsweise mittels Schneiden, Sägen und/oder Stanzen geschehen.

Das Gewebe des Zugträgers kann beispielsweise durch Weben, Stricken, Wirken oder/und Flechten hergestellt sein. Der Begriff Gewebe soll also vorliegend nicht auf die Herstellungsform Weben beschränkt sein, sondern soll alle möglichen Herstellungsarten von Flächengebilden mittels Fasern umfassen.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematisch gehaltene perspektivische Ansicht einer ersten Ausführungsform eines erfindungsgemäßen Endlosbandes;
- Figur 2: eine schematische Aufrissansicht des Endlosbandes der Figur 1; und
- Figur 3: eine Vorstufe eines Endlosbandes für die Herstellung eines Endlosbandes der Figuren 1 und 2.

### BESCHREIBUNG BEVORZUGTER AUSFÜHRUNGSBEISPIELE

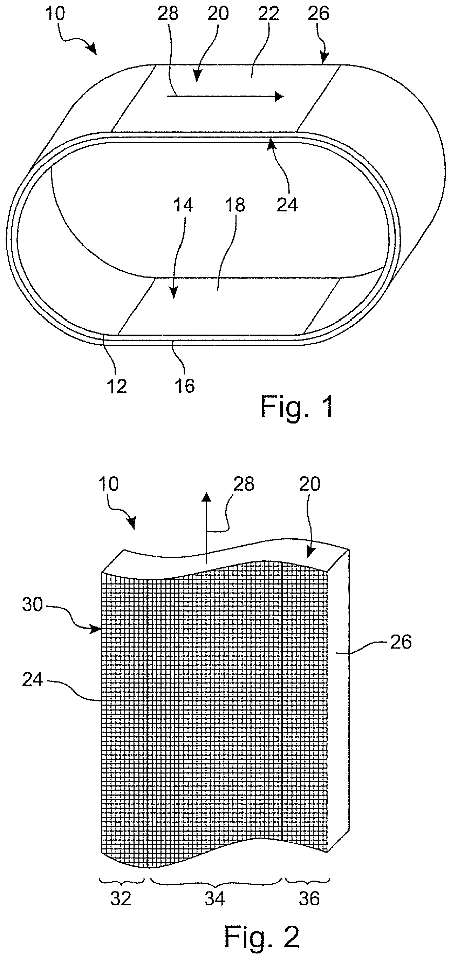

Figur 1 zeigt eine schematische perspektivische Ansicht eines Endlosbandes 10. Das Endlosband 10 ist vorliegend elliptisch dargestellt. Dies stellt aber lediglich eine mögliche Formgebung im Einsatzfall dar. Auch stellt das dargestellte Breiten- und Längenverhältnis lediglich eine beispielhafte Ausführungsform und kann je nach Einsatzzweck variiert werden.

Das Endlosband 10 ist vorliegend für den Transport von Nahrungsmitteln ausgelegt und weist einen mehrlagigen Aufbau auf. Eine innere Schicht 12 dient als Laufseite 14, in die eine Zugträger 16 eingebettet ist. Die innere Schicht 12 bildet auf ihrer inneren Seite eine Laufseite 18, welche in Kontakt mit Antriebs- oder Führungsrollen steht. Der in die innere Schicht 12 eingebettete Zugträger 16 wird im Detail nachstehend unter Bezugnahme auf Figur 2 näher erläutert werden.

Nach außen schließt das Endlosband 10 mit einer Tragschicht 20 ab, die eine Tragseite 22 bildet. Die Tragseite 22 kommt in direkten Kontakt mit einem zu bearbeitenden Nahrungsmittelprodukt.

Die Tragseite 22 und die Laufseite 18 werden durch Bandkanten 24, 26 verbunden. Die Bandkanten 24, 26 verlaufen entlang einer Laufrichtung 28, in welcher das Endlosband 10 bewegbar ist. Die vorliegende Erfindung ist nicht auf laufrichtungsgebundene Endlosbänder beschränkt, sondern kann selbstverständlich auch bei laufrichtungsunabhängigen Endlosbändern eingesetzt werden.

Der Zugträger 16 weist ein Gewebe 30 auf, wie dies näher in Figur 2 dargestellt ist. In Figur 2 ist ein Ausschnitt aus dem Endlosband 10 gezeigt, der quer zur Laufrichtung 28 ausgeschnitten und bei dem die Tragschicht 20 entfernt wurde.

Bei der dargestellten Ausführungsform erstreckt sich das Zuggewebe 30 von einer Bandkante 24 zu der anderen Bandkante 26. Das Zuggewebe 30 ist in der vorliegenden Ausführungsform als Gestricke ausgeführt, kann aber auch als Gewirke, Gewebe oder ähnliches hergestellt sein. Das Zuggewebe 30 ist in drei Zonen eingeteilt, die sich entlang der Laufrichtung 28 erstrecken und quer zur Lauf- oder Förderrichtung 28 aneinandergrenzen. Eine zentrale Zone 34 wird von zwei seitlichen Zonen 32, 36 flankiert, die sich im Bereich der Bandkanten 24, 26 befinden.

Die zentrale Zone 34 weist ein anderes Material auf als die seitlichen Zonen 32, 36. Das in der zentralen Zone 34 verwendete Material ist ein Gestricke aus einer Aramidfaser und für die Aufnahme hoher Zugkräfte ausgelegt. Beispielsweise kann das Material eine Reißfestigkeit pro 10 mm endloser Breite von mindestens 7000 N, eine Banddehnung bei 10 mm endloser Breite bei 300 N von maximal 0,3%, bei 600 N von maximal 0,5%, bei 1000 N von maximal 0,7% und eine Kraft bei 1% Dehnung und 10 mm endloser Breite von mindestens 1500 N aufweisen.

Das in den Randzonen 32, 36 verwendete Material hingegen weist eine geringere Reißfestigkeit auf, kann aber stattdessen für Nahrungsmittel, Futtermittel Kosmetika oder pharmazeutische Produkte geeignet sein. Feiner Abrieb oder kleinere herausgelöste Stücke des Zugträgergewebematerials stellen somit kein Risiko bei der Herstellung der entsprechenden Produkte dar. Gleichzeitig kann über die Breite der Randzonen 32, 36 die über das weniger zugfeste Gewebematerial eingeleitete Schwächung des gesamten Endlosbands 10 bestimmt werden. Je nach zu erwartender Beanspruchung des Endlosbands 10 über den Antrieb oder die Führung sowie die aufzunehmenden oder zu transportierenden Materialien kann die Breite der Randzonen 32, 36 eingestellt werden.

Bei der gezeigten Ausführungsform erstreckt sich das Zugträgergewebe herstellungsbedingt bis an den Rand, d.h. die Bandkanten 24, 26. Es sind aber auch Ausführungsformen denkbar, bei denen zwischen dem seitlichen Ende des Zugträgergewebes und dem eigentlichen seitlichen Rand des Endlosbands 10, d.h. den Bandkanten 24, 26 ein Rand ohne Zugträgergewebe 16 vorgesehen ist.

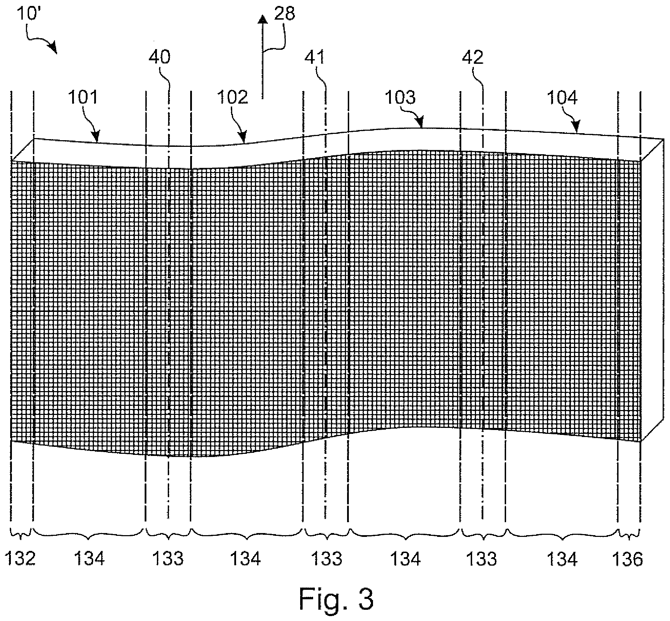

Figur 3 zeigt eine Vorstufe eines Endlosbands, wie sie bei der Herstellung eines Endlosbands 10 verwendet werden kann. Die Vorstufe bildet ein Endlosband, das in mehrere einzelne Endlosbänder zerteilt wird.

Konkret ist in Figur 3 ein der Figur 2 entsprechender schematischer Aufriss eines Endlosbandes 10' dargestellt. Im Unterschied zu der Figur 2 bildet das Endlosband 10' kein Endlosband, das für einen Einsatz gedacht ist. Vielmehr wird das Endlosband 10' in vier einzelne Endlosbänder 101-104 vereinzelt. Hierzu sind drei Trennlinien 40-42 vorgesehen.

Das Endlosband 10' weist wie das Endlosband 10 einen Zugträger mit einem Zugträgergewebe 16' auf. Es sind entsprechend den 4 zu vereinzelten Endlosbänder 101-104 insgesamt 9 verschiedene Zonen parallel zu der vorgesehenen Laufrichtung 28 vorgesehen. 2 äußere Randzonen 132, 136 begrenzen das Zugträgergewebe 16 nach außen. Nach ihnen schließen sich zentrale Zonen 134 an, die sich mit Zwischenzonen 133 abwechseln. Die äußeren Randzonen 132, 136 und die Zwischenzonen 133 sind aus einem nahrungsmittelverträglichen Gewebe gefertigt, die zentralen Zonen 134 aus einem zugfesten Material wie beispielsweise Aramid oder Kevlar.

## Patentansprüche

1. Endlosband (10) mit
a) einer Tragseite (22), einer Laufseite (18) sowie einer ersten und einer zweiten Bandkante (24, 26), welche entlang einer Laufrichtung (28) verlaufen,
b) einem Zugträger (16), der zwischen Tragseite (22) und Laufseite (18) angeordnet ist, wobei der Zugträger (16) ein Gewebe (30) aufweist, das sich von der ersten (24) zu der zweiten Bandkante (26) erstreckt, wobei das Gewebe (30) in einer Richtung senkrecht zu der Laufrichtung (28) zumindest zwei verschiedene Materialien aufweist, wobei das Gewebe (30) in einem Bereich der Bandkanten (24, 26) ein erstes Material aufweist und in einem von den Bandkanten (24, 26) abgewandten Bereich ein zweites Material aufweist, wobei sich das erste Material und das zweite Material unterscheiden,
**dadurch gekennzeichnet, dass**
c) das erste Material im Bereich der Bandkanten (24, 26) lebensmittelverträglich ist.

2. Endlosband nach Anspruch 1, wobei der Zugträger (16) mehrteilig ausgeführt ist.

3. Endlosband nach Anspruch 2, wobei je ein Teil des Zugträgers (16) im Bereich der Bandkanten (24, 26) und ein weiterer Teil des Zugträgers (16) zentral, also in dem von den Bandkanten abgewandten Bereich, angeordnet sind und/oder die einzelnen Teile des Zugträgers (16) das erste oder das zweite Material aufweisen.

4. Endlosband nach einem der vorhergehenden Ansprüche, wobei das erste Material ein Polyester umfasst.

5. Endlosband nach einem der vorhergehenden Ansprüche, wobei das zweite Material in dem von den Bandkanten (24, 26) entfernten Bereich eine Reißfestigkeit pro 10 mm endloser Breite von mindestens 800 N, eine Banddehnung bei 10 mm endloser Breite bei 300 N von maximal 2%, bei 600 N von maximal 4%, bei 1000 N von maximal 6% und eine Kraft bei 1% Dehnung und 10 mm endloser Breite von mindestens 200 N aufweist.

6. Endlosband nach einem der vorhergehenden Ansprüche, wobei das zweite Material ein Aramid-Gewebe umfasst.

7. Endlosband nach einem der vorhergehenden Ansprüche, wobei die Bandkanten (24, 26) durch einen Trennvorgang herstellbar sind.

8. Endlosband nach Anspruch 7, wobei der Trennvorgang ein Schneiden, Sägen und/oder Stanzen umfasst.

9. Endlosband nach einem der vorhergehenden Ansprüche, wobei das Gewebe (30) gewebt, gestrickt, gewirkt oder/und geflochten ist.

## Claims

1. Endless belt (10) with
a) a carrying side (22), a running side (18) and a first and a second belt edge (24, 26) running along a running direction (28),
b) a tension support (16) being arranged between the carrying side (22) and the running side (18), wherein the tension support (16) has a fabric (30) extending from the first (24) to the second belt edge (26), wherein the fabric (30) has, in a direction perpendicular to the running direction (28), at least two different materials, wherein the fabric (30) has a first material in a region of the belt edges (24, 26) and a second material in a region facing away from the belt edges (24, 26), wherein the first material and the second material are different,
**characterized in that**
c) the first material in the region of the belt edges (24, 26) is food grade.

2. Endless belt according to Claim 1, wherein the tension support (16) is designed in several parts.

3. Endless belt according to Claim 2, wherein in each case one part of the tension support (16) is located in the region of the belt edges (24, 26) and another part of the tension support (16) is located centrally, i.e. in the region facing away from the belt edges (24, 26), and/or the individual parts of the tension support (16) have the first or the second material.

4. Endless belt according to one of the preceding Claims, wherein the first material comprises a polyester.

5. Endless belt according to one of the preceding Claims, wherein the second material has, in the region facing away from the belt edges (24, 26), a tear resistance per 10 mm of endless width of at least 800 N, a belt stretching at 10 mm of endless width at 300 N of not more than 2 %, at 600 N of not more than 4 %, at 1000 N of not more than 6 %, and a force of at least 200 N at 1 % stretching and 10 mm endless width.

6. Endless belt according to one of the preceding Claims, wherein the second material comprises an aramid fabric.

7. Endless belt according to one of the preceding Claims, wherein the belt edges (24, 26) are producible by a separating process.

8. Endless belt according to Claim 7, wherein the separating process comprises cutting, sawing and/or punching.

9. Endless belt according to one of the preceding Claims, wherein the fabric (30) is woven, weft-knitted, warp-knitted or/and braided.

## Revendications

1. Bande sans fin (10) comprenant
a) un côté de support (22), un côté défilant (18), ainsi que des première et seconde bordures (24, 26) s'étendant le long d'une direction de défilement (28),
b) un support de traction (16) interposé entre le côté de support (22) et le côté défilant (18), lequel support de traction (16) comporte un tissu (30) s'étendant de la première (24) à la seconde bordure (26) de ladite bande, lequel tissu (30) inclut au moins deux matériaux différents dans une direction perpendiculaire à la direction de défilement (28), ledit tissu (30) présentant un premier matériau dans une région des bordures (24, 26) de la bande, et un second matériau dans une région pointant à l'opposé desdites bordures (24, 26) de la bande, le premier matériau et le second matériau étant différents,
**caractérisée par le fait que**
c) le premier matériau est doué de compatibilité alimentaire dans la région des bordures (24, 26) de la bande.

2. Bande sans fin selon la revendication 1, le support de traction (16) étant réalisé en plusieurs parties.

3. Bande sans fin selon la revendication 2, une partie respective du support de traction (16) étant disposée dans la région des bordures (24, 26) de ladite bande, et une autre partie dudit support de traction (16) étant disposée centralement, c'est-à-dire dans la région pointant à l'opposé desdites bordures de la bande, et/ou les parties individuelles dudit support de traction (16) étant munies du premier ou du second matériau.

4. Bande sans fin selon l'une des revendications précédentes, le premier matériau incluant un polyester.

5. Bande sans fin selon l'une des revendications précédentes, le second matériau présentant, dans la région éloignée des bordures (24, 26) de ladite bande, une résistance à la déchirure d'au moins 800 N par unité de 10 mm de largeur sans fin, un allongement de bande de 2 % au maximum à 300 N, de 4 % au maximum à 600 N, de 6 % au maximum à 1000 N, par unité de 10 mm de largeur sans fin, et une force d'au moins 200 N à 1 % d'allongement et par unité de 10 mm de largeur sans fin.

6. Bande sans fin selon l'une des revendications précédentes, le second matériau incluant un tissu d'aramide.

7. Bande sans fin selon l'une des revendications précédentes, les bordures (24, 26) de ladite bande pouvant être produites par un processus de séparation.

8. Bande sans fin selon la revendication 7, le processus de séparation incluant un sectionnement, un sciage et/ou un poinçonnage.

9. Bande sans fin selon l'une des revendications précédentes, le tissu (30) étant tissé, tricoté en trame, tricoté en chaîne et/ou tressé.
